# FASCICULE DE BREVET EUROPEEN

(11) **EP 1 630 041 B1**
(45) Date de publication et mention de la délivrance du brevet: **05.11.2008**
(21) Numéro de dépôt: 05300540.1
(22) Date de dépôt: 30.06.2005
(51) Int. Cl.: B60R 7/10

(54) **Dispositif d'accrochage dans un habitacle de véhicule**
Aufhängevorrichtung im Fahrzeuginnenraum
Attaching device in vehicle interior

(30) Priorité: 27.08.2004 FR 0451923
(43) Date de publication de la demande: 01.03.2006
(73) Titulaire: RENAULT S.A.S., 92100 Boulogne Billancourt (FR)
(72) Inventeur: Chomet, Jean-Gilles, 78000 Versailles (FR); Cyprieres, Daniel, 78300 Poissy (FR); Haviland, Franck, 78390 Bois d'Arcy (FR); Riou, Jean-Christophe, 78640 Villiers Saint Frédéric (FR)

(56) Documents cités:
- PATENT ABSTRACTS OF JAPAN vol. 2003, no. 12, 5 décembre 2003 (2003-12-05) & JP 2004 125044 A (MITSUBISHI MOTORS CORP; MITSUBISHI AUTOMOB ENG CO LTD; NIFCO INC), 22 avril 2004 (2004-04-22)

## Description

La présente invention se rapporte à un dispositif d'accrochage dans un habitacle de véhicule.

Elle concerne en particulier un tel dispositif qui comporte un corps muni d'une platine adaptée à coopérer avec un élément de structure du véhicule et muni d'un organe d'accrochage.

Un dispositif d'accrochage est décrit dans les documents JP 2004125044 et JP10258686 dans lequels un premier crochet raccordé à une platine forme un premier organe d'accrochage pour un fil de porte manteau. Un deuxième organe d'accrochage indépendant du premier organe comporte une barrette horizontale entre deux pattes verticales ménagées en partie inférieure de la platine. Le deuxième organe est adapté à coopérer avec un crochet d'extrémité d'une barre de rideau, entre deux branches verticales du premier organe.

Un tel dispositif n'est pas adapté à l'accrochage d'une barre de filet de retenue de charge en lieu et place d'une barre de rideau car il n'est pas assez robuste. Par filet de retenue, on entend un filet destiné au cloisonnement de l'habitacle et destiné à retenir en cas de choc des charges disposées dans l'habitacle, afin de protéger les occupants assis à l'avant des charges. Un dispositif d'accrochage d'un tel filet doit pouvoir résister à des efforts bien supérieurs à ceux nécessaires à l'accrochage d'un porte manteau ou d'un simple rideau.

L'invention vise à améliorer un tel dispositif d'accrochage pour qu'il soit adapté à l'accrochage d'un porte manteau et d'un filet de retenue de charge. Un tel dispositif amélioré doit être robuste, économique à fabriquer et compact. Il doit aussi autant que possible ne pas présenter de parties saillantes.

L'invention a pour objet un dispositif d'accrochage dans un habitacle de véhicule, comportant un corps muni d'une platine adaptée à coopérer avec un élément de structure du véhicule et muni d'un organe d'accrochage, caractérisé en ce que l'organe d'accrochage comporte une plaque de façade raccordée à la platine et en ce que le dispositif comporte, entre la platine et la plaque, un logement adapté à coopérer avec une tête d'extrémité d'une barre de filet de retenue et une cavité adaptée à coopérer avec un fil de porte manteau, la plaque étant un organe unique de maintien de la tête d'extrémité ou du fil de porte manteau.

Le logement peut déboucher sur la partie supérieure du corps. L'insertion de la barre dans le dispositif, par le haut, est aisée.

Le logement peut comporter une section sensiblement en U dont le fond est situé sensiblement au niveau du milieu du corps. Le maintien de la tête de la barre est efficace.

La cavité peut déboucher sur la partie supérieure du corps. L'insertion du fil de porte manteau dans le dispositif, par le haut, est aisée.

La cavité peut être une gorge située entre une portion supérieure de la platine et une portion supérieure de la plaque. Le maintien du fil de porte manteau est efficace.

Le logement et la cavité peuvent communiquer. Le dispositif est ainsi plus compact.

La cavité peut comporter un canal communiquant avec le logement en bas de ce dernier.

La plaque peut délimiter un trou débouchant en façade et dans le logement. Le maintien de la barre est efficace.

L'invention a également pour objet un véhicule qui comporte au moins un dispositif selon l'une quelconque des revendications précédentes, le dispositif étant un dispositif d'accrochage d'un porte manteau dans l'habitacle ou d'accrochage d'un filet de retenue.

Le véhicule automobile peut comporter une pluralité de dispositifs pour une pluralité de positions longitudinales du filet dans l'habitacle et une pluralité de positions longitudinales d'un porte manteau dans l'habitacle.

D'autres caractéristiques et avantages de l'invention apparaîtront clairement à la lecture de la description suivante des modes de réalisation non limitatifs de celle-ci, en liaison avec les dessins annexés sur lesquels :
- la figure 1 est une vue en plan d'un véhicule dont l'habitacle est équipé de dispositifs d'accrochage selon l'invention,
- la figure 2 est une vue de face d'un dispositif selon l'invention,
- la figure 3 est une coupe partielle selon la ligne III-III de la figure 2,
- la figure 4 est une coupe partielle selon la ligne IV-IV de la figure 2,
- la figure 5 est une vue de face d'une variante de dispositif selon l'invention,
- la figure 6 est une coupe selon la ligne VI-VI de la figure 5,
- la figure 7 est une vue de face d'une autre variante de dispositif selon l'invention.

Dans la description qui va suivre, la direction désignée L est la direction longitudinale correspondant à l'axe d'avancement d'un véhicule, la direction désignée T est transversale, la direction désignée V est verticale. L'axe L est orienté de l'avant vers l'arrière du véhicule, l'axe T de la gauche vers la droite et l'axe V du bas vers le haut.

Certains véhicules, en particulier des véhicules utilitaires équipés en véhicule de loisir, comportent un habitacle à cloisonner pour retenir une charge placée dans l'habitacle afin de protéger, lors d'un choc ou accident, des occupants assis au devant de la charge.

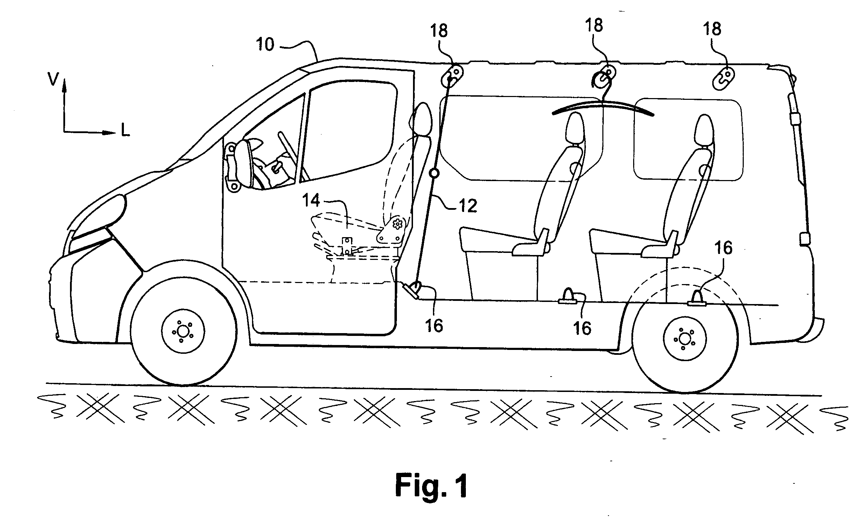

Dans le véhicule 10 représenté à la figure 1, un filet 12 de retenue de charge est placé derrière la première rangée de sièges 14.

Le filet 12 est monté entre un point d'ancrage bas tel qu'un anneau d'arrimage 16 et un point d'ancrage haut formé par un dispositif d'accrochage 18 selon l'invention.

Le filet peut être placé derrière chacune des rangées de siège, une pluralité d'anneaux d'arrimage 16 et de dispositifs d'accrochage 18, décalés longitudinalement dans le véhicule, étant disponibles, au bénéfice de la modularité de l'habitacle.

Pour sa fixation sur le point d'ancrage haut formé par un des dispositifs 18 selon l'invention, le filet comporte une barre supérieure 26. La barre supérieure 26 du filet 12 est une barre rigide qui a un diamètre D1 et qui comporte à chacune de ses extrémités une tête 24 sous forme d'un cylindre de diamètre D2 supérieur à D1 afin de présenter un épaulement 32. Par exemple, D1 est égal à 8 millimètres et D2 égal à 18 millimètres.

Le dispositif d'accrochage 18 selon l'invention permet d'utiliser un unique dispositif pour deux fonctions, une fonction d'accrochage d'un filet et une fonction d'accrochage de porte manteau. Il permet d'éviter de fixer dans l'habitacle un dispositif spécifique pour le filet et un dispositif spécifique pour les portes manteaux, au bénéfice de la réduction du nombre de pièces et du nombre d'opérations de montage.

La pluralité de dispositifs 18 à divers emplacements le long d'un brancard de pavillon permet de placer un vêtement à l'endroit souhaité ou de placer une pluralité de vêtements, tout en autorisant la fixation du filet à un autre emplacement.

Chaque dispositif d'accrochage 18 comporte un corps avec une platine 20 ou embase de fixation adaptée à coopérer avec un élément de structure du véhicule.

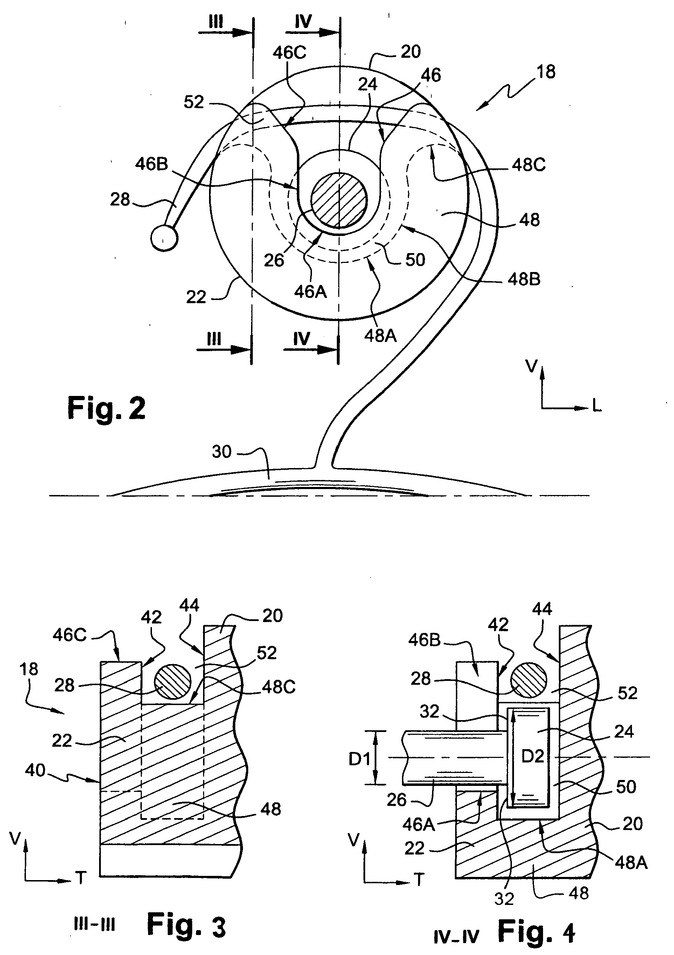

Dans le premier mode de réalisation représenté aux figures 2 à 4, la platine 20 présente une section sensiblement circulaire, par exemple de 40 millimètres de diamètre. Elle comporte des moyens non représentés de fixation à une tôle de brancard de pavillon du véhicule 10.

Le corps de chaque dispositif d'accrochage 18 comporte un organe d'accrochage comportant une plaque de façade 22 raccordée à la platine 20 et formant un organe unique de maintien. La plaque 22 est un organe commun pour le maintien de la tête d'extrémité 24 de la barre supérieure 26 du filet de retenue 12 ou d'un fil 28 de porte manteau 30.

La platine 20 comporte côté habitacle une face interne 44 sensiblement verticale.

La plaque de façade 22 comporte côté habitacle une face de façade 40 sensiblement verticale, visible par un utilisateur situé dans l'habitacle. La plaque 22 comporte une face interne 42 sensiblement verticale côté platine 20. La plaque 22 comporte une face supérieure 46 comportant, vers le centre une portion sensiblement demi cylindrique, 46A, raccordée latéralement par deux portions sensiblement planes et verticales 46B, chacune raccordée à une portion évasée 46C. Les portions évasées 46C sont inclinées du bas vers le haut, du centre vers la périphérie de la plaque 22.

La face supérieure 46 forme un trou débouchant tant en façade côté habitacle que côté platine 20, délimité par les portions 46A et 46B. Le rayon de la portion 46A est par exemple de 4,5 millimètres, soit légèrement supérieur à D1/2. Les portions 46A et 46B sont adaptées à recevoir un tronçon de la barre 26 du filet 12. Les portions évasées 46C forment un guide d'insertion de la barre 26 dans le dispositif 18.

Entre la plaque 22 et la platine 20, pour raccorder la plaque 22 sur la platine 20, le corps comprend une partie intermédiaire 48 de section sensiblement en U. La partie intermédiaire comporte une face supérieure raccordant les faces internes 42 et 44. La face supérieure de la partie intermédiaire 48 comporte vers le centre une portion sensiblement demi cylindrique 48A, raccordée latéralement par deux portions verticales 48B, chacune raccordée à des portions supérieures 48C en demi cylindre. Les portions 46A et 46B sont sensiblement parallèles aux portions 48A et 48B. Le rayon de la portion 48A est par exemple de 10 millimètres, soit légèrement supérieur à D2/2.

Entre les faces internes 42 et 44, les portions 48A et 48B délimitent un logement 50 de section sensiblement en U, adapté à la réception de la tête d'extrémité 24. L'épaulement 32 est en correspondance de la face 42, pour la retenue transversale de la barre 26.

Entre les faces internes 42 et 44, les portions 48C et 48B délimitent deux cavités 52 sous forme d'une gorge, le sommet de la face 46C étant situé au dessus du sommet de la face 48C. Les cavités 52 débouchent sur la partie supérieure du corps, la gorge étant située entre une portion supérieure de la platine 20 et une portion supérieure de la plaque 22. Les cavités sont adaptées à la réception d'un fil de porte manteau, en particulier de sa partie supérieure recourbée selon un cercle.

Tant la tête 24 du filet 12 que le fil 28 du porte manteau sont retenus longitudinalement par la partie intermédiaire 48 du corps et transversalement par la plaque 22. Une unique pièce, sans partie saillante et aux formes pouvant s'adapter à l'habillage de pavillon du véhicule, permet donc d'assurer les deux types d'accrochage. La robustesse du dispositif, nécessaire à l'accrochage du filet 12, est assurée par la section de la partie intermédiaire 48, de plusieurs centimètres carrés, entre la platine 20 et la plaque 22. L'épaisseur de la partie intermédiaire 48 est par exemple de 5 millimètres. La surface de la section de la partie intermédiaire 48 représente entre un tiers et deux tiers de la surface de la section de la partie de la platine 20 visible par un utilisateur dans l'habitacle. La surface de la section de la partie intermédiaire 48 représente plus le la moitié de la surface de la section de la portion de la plaque 22 visible par un utilisateur dans l'habitacle.

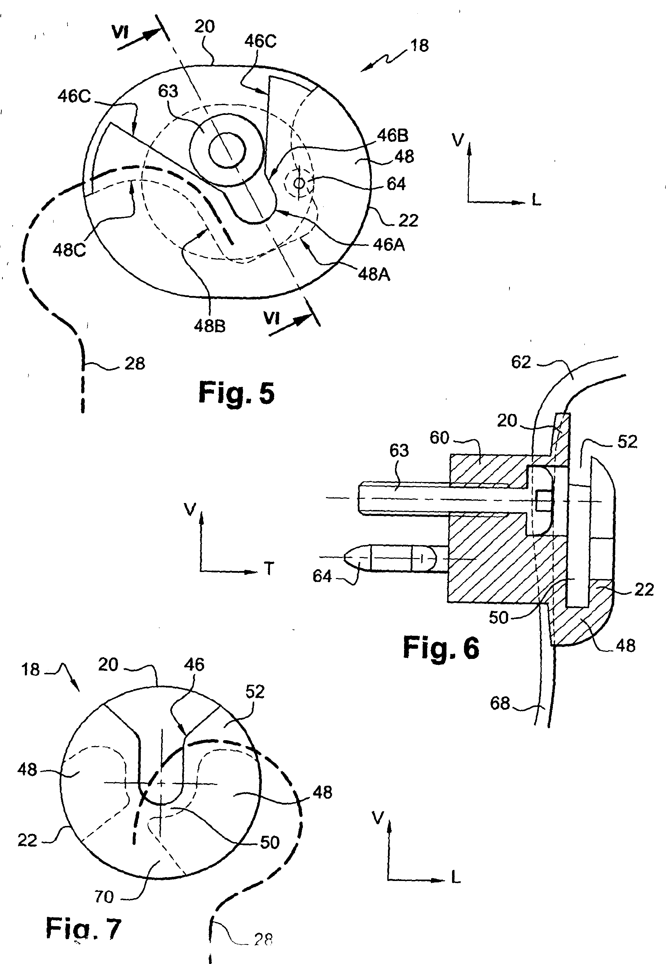

Dans l'exemple de réalisation de la figure 5, la platine 20 est oblongue, les profils des faces supérieures de la plaque 22 et de la partie intermédiaire sont légèrement différents. L'orientation de montage du dispositif dans le véhicule est différente, pour changer l'ergonomie d'utilisation. En particulier, le fond du logement 50 n'est plus cylindrique, mais de parallélépipédique avec des chanfreins dans les angles. La portion 48A comporte donc une partie plane, sur laquelle peut venir s'appuyer l'extrémité libre du fil 28 de porte manteau. Ici, une partie de la cavité 52 est dans le logement 50.

A la figure 6, le corps est représenté dans son intégralité. La platine 20 est raccordée à un tronc 60 dans lequel passe une vis 63 pour la fixation du dispositif 18 sur un élément de structure de brancard du véhicule, à travers un habillage 62 de pavillon. Un pion 64 permet l'indexation en position du dispositif lors de son montage sur l'élément de structure.

L'exemple de réalisation de la figure 7, diffère de celui la figure 2 par la présence d'un canal 70 qui débouche dans la portion 48A, vers la périphérie du dispositif 18, pour engagement de l'extrémité libre du fil 28 de porte manteau. La partie intermédiaire 48 est séparée en deux par le canal 70. Le canal 70 est évasé vers le bas pour l'adaptation à diverses configurations du fil 28.

Avantageusement, l'insertion par le haut de la tête (24) de la barre (26) du filet (12) ou le positionnement d'un fil (28) de porte manteau (30) est aisée, de par la forme du trou délimité par la face supérieure 46 et la forme de la cavité 52, en particulier la forme des la gorge ou canal 70.

## Revendications

1. Dispositif (18) d'accrochage dans un habitacle de véhicule (10), comportant un corps muni d'une platine (20) adaptée à coopérer avec un élément de structure du véhicule et muni d'un organe d'accrochage, **caractérisé en ce que** l'organe d'accrochage comporte une plaque de façade (22) raccordée à la platine (20) et **en ce que** le dispositif (18) comporte, entre la platine (20) et la plaque (22), un logement (50) adapté à coopérer avec une tête d'extrémité (24) d'une barre (26) de filet (12) de retenue et une cavité (52) adaptée à coopérer avec un fil (28) de porte manteau (30), la plaque (22) étant un organe unique de maintien de la tête d'extrémité (24) ou du fil (28) de porte manteau (30).

2. Dispositif selon la revendication 1, **caractérisé en ce que** le logement (50) débouche sur la partie supérieure du corps.

3. Dispositif selon l'une quelconque des revendications précédentes, **caractérisé en ce que** le logement (50) comporte une section sensiblement en U dont le fond (48A) est situé sensiblement au niveau du milieu du corps.

4. Dispositif selon l'une quelconque des revendications précédentes, **caractérisé en ce que** la cavité (52) débouche sur la partie supérieure du corps.

5. Dispositif selon l'une quelconque des revendications précédentes, **caractérisé en ce que** la cavité est une gorge située entre une portion supérieure de la platine et une portion supérieure de la plaque.

6. Dispositif selon l'une quelconque des revendications précédentes, **caractérisé en ce que** le logement (50) et la cavité (52) communiquent.

7. Dispositif selon la revendication précédente, **caractérisé en ce que** la cavité (52) comporte un canal (70) communiquant avec le logement en bas de ce dernier.

8. Dispositif selon l'une quelconque des revendications précédentes, **caractérisé en ce que** la plaque (22) délimite un trou (46) débouchant en façade et dans le logement (50).

9. Véhicule **caractérisé en ce qu'**il comporte au moins un dispositif (18) selon l'une quelconque des revendications précédentes, le dispositif étant un dispositif d'accrochage d'un porte manteau (28, 30) dans l'habitacle ou d'accrochage d'un filet (12) de retenue.

10. Véhicule automobile selon la revendication précédente, **caractérisé en ce qu'**il comporte une pluralité de dispositifs (18) pour une pluralité de positions longitudinales du filet (12) dans l'habitacle et une pluralité de positions longitudinales d'un porte manteau (28, 30) dans l'habitacle.

## Claims

1. Attachment device (18) for the passenger compartment (10) of a vehicle, comprising a body provided with a plate (20) designed to engage with a structural element of the vehicle and provided with an attachment member, **characterized in that** the attachment member comprises a front cap (22) connected to the plate (20) and **in that** the device (18) comprises, between the plate (20) and the cap (22), a housing (50) designed to engage with an end head (24) of a bolt (26) of a retaining net (12) and a cavity (52) designed to engage with the hook (28) of a coat hanger (30), the cap (22) being a single member for holding the end head (24) or the hook (28) of the coat hanger (30).

2. Device according to Claim 1, **characterized in that** the housing (50) opens onto the upper part of the body.

3. Device according to either of the preceding claims, **characterized in that** the housing (50) comprises an approximately U-shaped section, the bottom (48A) of which is located approximately at the middle of the body.

4. Device according to any one of the preceding claims, **characterized in that** the cavity (52) opens onto the upper part of the body.

5. Device according to any one of the preceding claims, **characterized in that** the cavity is a groove located between an upper portion of the plate and an upper portion of the cap.

6. Device according to any one of the preceding claims, **characterized in that** the housing (50) and the cavity (52) are in communication.

7. Device according to the preceding claim, **characterized in that** the cavity (52) comprises a channel (70) communicating with the housing at the bottom of the latter.

8. Device according to any one of the preceding claims, **characterized in that** the cap (22) delimits a hole (46) opening at the front and into the housing (50).

9. Vehicle **characterized in that** it comprises at least one device (18) according to any one of the preceding claims, the device being a device for attaching a coat hanger (28, 30) in the passenger compartment or for attaching a retaining net (12).

10. Motor vehicle according to the preceding claim, **characterized in that** it comprises a plurality of devices (18) for a plurality of longitudinal positions of the net (12) in the passenger compartment and a plurality of longitudinal positions of a coat hanger (28, 30) in the passenger compartment.

## Patentansprüche

1. Aufhängevorrichtung (18) in einem Fahrzeug-Fahrgastraum (10), mit einem Körper, der mit einer Scheibe (20) versehen ist, die dazu ausgelegt ist, mit einem Konstruktionselement des Fahrzeugs zusammenzuwirken, und mit einem Aufhängeorgan versehen ist, **dadurch gekennzeichnet ist, dass** das Aufhängeorgan eine Frontplatte (22) aufweist, die mit der Platine (20) verbunden ist, und dass die Vorrichtung (18) zwischen der Platine (20) und der Platte (22) einen Aufnahmesitz (50), der dazu ausgelegt ist, mit einem Endkopf (24) eines Stabs (26) eines Rückhaltenetzes (12) zusammenzuwirken, und einen Hohlraum (52), der dazu ausgelegt ist, mit einem Draht (28) eines Kleiderbügels (30) zusammenzuwirken, aufweist, wobei die Platte (22) ein einziges Organ zum Halten des Endkopfs (24) oder des Drahts (28) des Kleiderbügels (30) ist.

2. Vorrichtung nach Anspruch 1, **dadurch gekennzeichnet, dass** der Aufnahmesitz (50) im oberen Teil des Körpers offen ist.

3. Vorrichtung nach einem der vorhergehenden Ansprüche, **dadurch gekennzeichnet, dass** der Aufnahmesitz (50) einen im Wesentlichen U-förmigen Abschnitt aufweist, dessen Boden (48A) sich im Wesentlichen auf Höhe der Mitte des Körpers befindet.

4. Vorrichtung nach einem der vorhergehenden Ansprüche, **dadurch gekennzeichnet, dass** der Hohlraum (52) im oberen Teil des Körpers offen ist.

5. Vorrichtung nach einem der vorhergehenden Ansprüche, **dadurch gekennzeichnet, dass** der Hohlraum eine Nut ist, die sich zwischen einem oberen Abschnitt der Platine und einem oberen Abschnitt der Platte befindet.

6. Vorrichtung nach einem der vorhergehenden Ansprüche, **dadurch gekennzeichnet, dass** der Aufnahmesitz (50) und der Hohlraum (52) in Verbindung stehen.

7. Vorrichtung nach dem vorhergehenden Anspruch, **dadurch gekennzeichnet, dass** der Hohlraum (52) einen Kanal (70) aufweist, der mit dem unterem Bereich des Aufnahmesitzes in Verbindung steht.

8. Vorrichtung nach einem der vorhergehenden Ansprüche, **dadurch gekennzeichnet, dass** die Platte (22) ein Loch (46) begrenzt, das in die Frontseite und in den Aufnahmesitz (50) mündet.

9. Fahrzeug, **dadurch gekennzeichnet, dass** es wenigstens eine Vorrichtung (18) nach einem der vorhergehenden Ansprüche enthält, wobei die Vorrichtung eine Aufhängevorrichtung für einen Kleiderbügel (28, 30) im Fahrgastraum oder eine Aufhängevorrichtung für ein Rückhaltenetz (12) ist.

10. Kraftfahrzeug nach dem vorhergehenden Anspruch, **dadurch gekennzeichnet, dass** es mehrere Vorrichtungen (18) für mehrere longitudinale Positionen des Netzes (12) im Fahrgastraum und für mehrere longitudinale Positionen eines Kleiderbügels (28, 30) im Fahrgastraum enthält.
